# EUROPEAN PATENT APPLICATION

(11) **EP 2 192 699 A1**
(43) Date of publication of application: **02.06.2010**
(21) Application number: 08170127.8
(22) Date of filing: 27.11.2008
(51) Int. Cl.: H04B 7/14

(54) **Multi-mode relays for relay enhanced networks**

(71) Applicant: Nokia Siemens Networks OY, 02610 Espoo (FI)
(72) Inventor: Raaf, Bernhard, 82061 Neuried (DE); Redana, Simone, 81541 München (DE); Teyeb, Oumer, 9000 Aalborg (DK); Van Phan, Vinh, 90100 Oulu (FI); Wigard, Jeroen, 9270 Klarup (DK)
(74) Representative: TBK-Patent

(57) **Abstract**

It is provided an apparatus, a system, a method, and a computer program product for multi-mode relaying. Specifically, a radio base station and a relay node connectable with each other by a secondary out-of-band wireless link in addition to an in-band link are described. The in-band link is used to control the activation/deactivation of the secondary link.

## Description

### Field of the invention

The present invention relates to an apparatus, a system, a method, and a computer program product for multi-mode relaying.

### Background of the invention

Relay stations (RSs) or Relay Nodes (RNs) have been proposed as coverage extensions in cellular systems since several years. Apart from this main goal of coverage extension, introducing relay concepts can also help in:
- Provision of high-bit-rate coverage in high shadowing environment;
- Reducing average radio-transmission power at the User Equipment UE, thereby saving the UE's energy consumption;
- Enhancing cell capacity and effective throughput, e.g., increasing cell-edge capacity and balancing cell load;
- Enhancing overall performance and deployment cost of a radio access network RAN.

After being carefully considered in pre-standardization activities like Wireless World Initiative (WWI) / Wireless World Initiative New Radio (WINNER), relay systems are achieving the level of maturity that is needed in ongoing standardization activities. The best evidence of this maturity is the 802.16j standardization where relays are added on top of 802.16e standard. This recent development has increased the pressure to consider relays also in long term evolution (LTE) standardization. In order to keep LTE competitive it is more than probable that relay extensions to LTE are to be studied within future releases of LTE. In the 3GPP partnership project, discussions have already started regarding LTE Advanced standardization, and relaying has been proposed as one of the key candidate features, see 3^{rd} generation partnership project (3GPP), REV-080060, "Report of 3GPP TSG RAN IMT-Advanced Workshop", Apr. 2008,http://www.3gpp.org/ftp/workshop/2008-04-07 RAN IMT Advanced/Docs/REV-080060.zip.

### Summary of the invention

It is an object of the present invention to improve the prior art.

According to a first aspect of the present invention, there is provided an apparatus, comprising base station means configured to provide a radio base station functionality comprising the ability to communicate wirelessly using a protocol compatible with a first interface protocol; first interface means configured to be wirelessly operably connected with a second apparatus using the first interface protocol; secondary interface means configured to be operably connected with the second apparatus using a secondary interface protocol different from the first interface protocol; decision means configured to meet, based on a criteria information, a decision whether to operably connect the secondary interface with the second apparatus and to cause transmitting of a corresponding control information to the second apparatus, wherein the decision to operably connect the secondary interface is met only if a type information corresponds to the secondary interface means; activating means configured to cause the secondary interface means to be operably connected with the second apparatus depending on the decision; wherein the control information is transmitted using the first interface means independent from the decision and from the presence of an operable connection of the secondary interface means with the second apparatus.

Modifications of the first aspect of the present invention may be as follows:
The apparatus may be a radio base station. The second apparatus may be a relay node or a relay station.

In the apparatus according to the first aspect, the first interface means may be additionally configured to receive an identification of an interface protocol, and the apparatus may further comprise type setting means configured to set the type information corresponding to the secondary interface means when the identification is an identification of the secondary interface protocol.

The apparatus according to the first aspect may further comprise setting means configured to set the criteria information based on at least one of a predefined information, a load related to the first interface protocol, a load related to the secondary interface protocol, a load balancing information from neighboring cells, a load information received from the second apparatus, a capacity of the connection of the first interface means, a capacity of the connection of the secondary interface means, an earlier decision of the decision means, an information related to costs of the connection of the first interface means and the secondary interface means, an information related to the energy consumption of the connection of the first interface means and the secondary interface means.

The apparatus according to the first aspect may further comprise load multiplex means configured to multiplex, when the secondary interface means is operably connected with the second apparatus, a load to be communicated with the second apparatus between the first interface means and the secondary interface means based on at least one of a predefined information, a load related to the first interface protocol, a load related to the secondary interface protocol, a load balancing information from neighboring cells, a load information received from the second apparatus, a capacity of the connection of the first interface means, a capacity of the connection of the secondary interface means, an information related to costs related to the load on the connection of the first interface means and the secondary interface means, an information related to the energy consumption related to the load on the connection of the first interface means and the secondary interface means; to cause at least one of the first interface means and the secondary interface means to transmit a multiplex information corresponding to the load distribution; and to demultiplex a load received by the first interface means and the secondary interface means.

The apparatus according to the first aspect may further comprise more than one secondary interface means.

In the apparatus according to the first aspect, the radio base station functionality may be a NodeB functionality of a long term evolution system.

In the apparatus according to the first aspect, the secondary interface protocol may be based on one of a wireless interface protocol including a general packet radio service, a universal mobile telecommunications system, a high speed packet access, and a microwave based protocol.

According to a second aspect of the present invention, there is provided an apparatus, comprising a processor configured to provide a radio base station functionality comprising the ability to communicate wirelessly using a protocol compatible with a first interface protocol; first processor configured to provide an interface functionality to be wirelessly operably connected with a second apparatus using the first interface protocol; secondary processor configured to provide an interface functionality to be operably connected with the second apparatus using a secondary interface protocol not compatible with the first interface protocol; decider configured to meet, based on a criteria information, a decision whether to operably connect the secondary interface with the second apparatus and to cause transmitting of a corresponding control information to the second apparatus, wherein the decision to operably connect the secondary processor is met only if a type information corresponds to the secondary processor; activator configured to cause the secondary processor to be operably connected with the second apparatus depending on the decision; wherein the control information is transmitted using the first processor independent from the decision and from the presence of an operable connection of the secondary processor with the second apparatus.

Modifications of the second aspect of the present invention may be as follows:
The apparatus may be a radio base station. The second apparatus may be a relay node or a relay station.

In the apparatus according to the second aspect, the first processor may be additionally configured to receive an identification of an interface protocol, and the apparatus may further comprise type setter configured to set the type information corresponding to the secondary processor when the identification is an identification of the secondary interface protocol.

The apparatus according to the second aspect may further comprise setter configured to set the criteria information based on at least one of a predefined information, a load related to the first interface protocol, a load related to the secondary interface protocol, a load balancing information from neighboring cells, a load information received from the second apparatus, a capacity of the connection of the first interface, a capacity of the connection of the secondary interface, an earlier decision of the decider, an information related to costs of the connection of the first processor and the secondary processor, an information related to the energy consumption of the connection of the first processor and the secondary processor.

The apparatus according to the second aspect may further comprise load multiplexer configured to multiplex, when the secondary processor is operably connected with the second apparatus, a load to be communicated with the second apparatus between the first processor and the secondary processor based on at least one of a predefined information, a load related to the first interface protocol, a load related to the secondary interface protocol, a load balancing information from neighboring cells, a load information received from the second apparatus, a capacity of the connection of the first processor, a capacity of the connection of the secondary processor, an information related to costs related to the load on the connection of the first processor and the secondary processor, an information related to the energy consumption related to the load on the connection of the first processor and the secondary processor; to cause at least one of the first processor and the secondary processor to transmit a multiplex information corresponding to the load distribution; and to demultiplex a load received by the first processor and the secondary processor.

The apparatus according to the second aspect may further comprise more than one secondary processor.

In the apparatus according to the second aspect, the radio base station functionality may be a NodeB functionality of a long term evolution system.

In the apparatus according to the second aspect, the secondary interface protocol may be based on one of a wireless interface protocol including a general packet radio service, a universal mobile telecommunications system, a high speed packet access, and a microwave based protocol.

According to a third aspect of the present invention, there is provided an apparatus, comprising relay node means configured to provide a relay node functionality comprising the ability to communicate wirelessly using a protocol compatible with a first interface protocol; first interface means configured to be wirelessly operably connected with a second apparatus using the first interface protocol including to receive a control information; secondary interface means configured to be operably connected with the second apparatus using a secondary interface protocol not compatible with the first interface protocol; and activating means configured to cause the secondary interface means to be operably connected with the second apparatus depending on the decision information; wherein the control information is received by the first interface means independent from a content of the control information and from the presence of an operable connection of the secondary interface means with the second apparatus.

Modifications of the third aspect of the present invention may be as follows:
The apparatus may be a relay node or a relay station. The second apparatus may be a base station.

In the apparatus according to the third aspect, the first interface means may be additionally configured to send an identification of the secondary interface protocol.

In the apparatus according to the third aspect, at least one of the first interface means and the secondary interface means may be further configured to transmit to the second apparatus at least one of a load measured related to the first interface protocol and a load measured related to the secondary interface protocol.

In the apparatus according to the third aspect, at least one of the first interface means and the secondary interface means may be further configured to receive a multiplex information; the apparatus may further comprise load multiplex means configured to de-multiplex a load received by the first interface means and the secondary interface means based on the multiplex information; and to multiplex a load to be communicated with the second apparatus between the first interface means and the secondary interface means based on the multiplex information.

The apparatus according to the third aspect may further comprise more than one secondary interface means.

In the apparatus according to the third aspect, the relay node functionality may be a relay node functionality of a long term evolution system.

In the apparatus according to the third aspect, the secondary interface protocol may be based on one of a wireless interface protocol including a general packet radio service, a universal mobile telecommunications system, a high speed packet access, and a microwave based protocol.

According to a fourth aspect of the present invention, there is provided an apparatus, comprising a processor configured to provide a relay node functionality comprising the ability to communicate wirelessly using a protocol compatible with a first interface protocol; first processor configured to provide an interface functionality to be wirelessly operably connected with a second apparatus using the first interface protocol including to receive a control information; secondary processor configured to provide an interface functionality to be operably connected with the second apparatus using a secondary interface protocol not compatible with the first interface protocol; and activator configured to cause the secondary processor to be operably connected with the second apparatus depending on the decision information; wherein the control information is received by the first processor independent from a content of the control information and from the presence of an operable connection of the secondary processor with the second apparatus.

Modifications of the fourth aspect of the present invention may be as follows:
The apparatus may be a relay node or a relay station. The second apparatus may be a base station.

In the apparatus according to the fourth aspect, the first processor may be additionally configured to send an identification of the secondary interface protocol.

In the apparatus according to the fourth aspect, at least one of the first processor and the secondary processor may be further configured to transmit to the second apparatus at least one of a load measured related to the first interface protocol and a load measured related to the secondary interface protocol.

In the apparatus according to the fourth aspect, at least one of the first processor and the secondary processor may be further configured to receive a multiplex information; the apparatus may further comprise load multiplexer configured to de-multiplex a load received by the first processor and the secondary processor based on the multiplex information; and to multiplex a load to be communicated with the second apparatus between the first processor and the secondary processor based on the multiplex information.

The apparatus according to the fourth aspect may further comprise more than one secondary processor.

In the apparatus according to the fourth aspect, the relay node functionality may be a relay node functionality of a long term evolution system.

In the apparatus according to the fourth aspect, the secondary interface protocol may be based on one of a wireless interface protocol including a general packet radio service, a universal mobile telecommunications system, a high speed packet access, and a microwave based protocol.

According to a fifth aspect of the present invention, there is provided a system, comprising a first apparatus according to the first aspect of the present invention; and a second apparatus according to the third aspect of the present invention; wherein the first interface means of the first apparatus and the first interface means of the second apparatus are configured to be operably connected with each other; wherein the secondary interface means of the first apparatus and the secondary interface means of the second apparatus are configured to be operably connected with each other; and wherein the control information received by the first interface means of the second apparatus corresponds to the control information sent by the first interface means of the first apparatus.

According to a sixth aspect of the present invention, there is provided a system, comprising a first apparatus according to the second aspect of the present invention; and a second apparatus according to the fourth aspect of the present invention; wherein the first processor of the first apparatus and the first processor of the second apparatus are configured to be operably connected with each other; wherein the secondary processor of the first apparatus and the secondary processor of the second apparatus are configured to be operably connected with each other; and wherein the control information received by the first processor of the second apparatus corresponds to the control information sent by the first processor of the first apparatus.

According to a seventh aspect of the present invention, there is provided a method, comprising wirelessly operably connecting a first apparatus with a second apparatus using a first interface protocol, wherein the first apparatus is configured to provide a radio base station functionality comprising the ability to communicate wirelessly using a protocol compatible with the first interface protocol; meeting a decision by the first apparatus based on a criteria information, whether the first apparatus is operably connected with the second apparatus using a secondary interface protocol not compatible with the first interface protocol, wherein the decision to operably connect using the secondary interface protocol is met only if a type information corresponds to the secondary interface protocol; depending on the decision, operably connecting the first apparatus with the second apparatus using the secondary interface protocol; and transmitting a control information corresponding to the decision using the first interface protocol independent from the decision and from the presence of an operable connection using the secondary interface protocol.

Modifications of the seventh aspect of the present invention may be as follows:
The first apparatus may be a base station. The second apparatus may be a relay node or a relay station.

The method according to the seventh aspect of the present invention may further comprise receiving an identification of an interface protocol, and setting the type information corresponding to the secondary interface protocol when the identification is an identification of the secondary interface protocol.

In the method according to the seventh aspect of the present invention, the criteria information may be set based on at least one of a predefined information, a load measured related to the first interface protocol, a load measured related to the secondary interface protocol, a load balancing information from neighboring cells, a load information received from the second apparatus, a capacity of the connection of the first interface protocol, a capacity of the connection of the secondary interface protocol, an earlier decision, an information related to costs of the connection of the first interface protocol and the secondary interface protocol, an information related to the energy consumption of the connection of the first interface protocol and the secondary interface protocol.

The method according to the seventh aspect of the present invention may further comprise multiplexing, when the secondary interface means is operably connected with the second apparatus, a load to be communicated with the second apparatus between the first interface protocol and the secondary interface protocol based on at least one of a predefined information, a load measured related to the first interface protocol, a load measured related to the secondary interface protocol, a load balancing information from neighboring cells, a load information received from the second apparatus, a capacity of the connection of the first interface protocol, a capacity of the connection of the secondary interface protocol, an information related to costs related to the load on the connection of the first interface protocol and the secondary interface protocol, an information related to the energy consumption related to the load on the connection of the first interface protocol and the secondary interface protocol; transmitting a multiplex information corresponding to the load distribution using at least one of the first interface protocol and the secondary interface protocol; and demultiplexing a load received using the first interface protocol and the secondary interface protocol.

According to an eighth aspect of the present invention, there is provided a method comprising operably connecting a first apparatus with a second apparatus using a first interface protocol, wherein the first apparatus is configured to provide a relay node functionality comprising the ability to communicate wirelessly using a protocol compatible with the first interface protocol; receiving by the first apparatus from the second apparatus a control information using the first interface protocol; depending on the control information, operably connecting the first apparatus with the second apparatus using a secondary interface protocol not compatible with the first interface protocol; wherein the control information is received using the first interface protocol independent from a content of the control information and from the presence of an operable connection with the second apparatus using the secondary interface protocol.

Modifications of the eighth aspect of the present invention may be as follows:
The first apparatus may be a relay node or a relay station. The second apparatus may be a base station.

The method according to the eighth aspect of the present invention may further comprise sending an identification of the secondary interface protocol.

The method according to the eighth aspect of the present invention may further comprise transmitting to the second apparatus at least one of a load measured related to the first interface protocol and a load measured related to the secondary interface protocol.

The method according to the eighth aspect of the present invention may further comprise receiving a multiplex information; de-multiplexing a load received using the first interface protocol and the second interface protocol based on the first multiplex information; and multiplexing a load to be communicated with the second apparatus between usage of the first interface protocol and usage of the secondary interface protocol based on the multiplex information.

According to an ninth aspect of the present invention, there is provided a computer program product embodied on a computer-readable medium, comprising program code means which perform, when run on a computer, the method according to the seventh or eighth aspect of the present invention.

Further details, features, objects, and advantages are apparent from the following detailed description of the preferred embodiments of the present invention which is to be taken in conjunction with the appended drawings, in which
Fig. 1 shows a deployment scenario of a relay enhanced radio access network with user equipment;
Fig. 2 shows interfaces a relay enhanced radio access network;
Fig. 3 shows a deployment scenario of another relay enhanced radio access network with user equipment;
Fig. 4 shows interfaces of another relay enhanced radio access network; and
Fig. 5 shows a communication between a base station and a relay node.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

There are many kinds of relay systems proposed starting from the simplest one i.e. amplify/forward (applied in single frequency digital video broadcast - home (DVB-H) networks, for example) ending up to the most complex one, which utilizes a network coding to improve the overall performance. The most common relay type that is proposed for cellular relaying is a detect/forward type of relay, where an input signal is detected and retransmitted using the same procedure as in the original transmission.

From a protocol perspective, relaying can be realized at different layers of the protocol stack. A simple amplify and forward relaying can be realized at the layer 1 of the protocol stack where the relay is required to have only (some part of) the physical (PHY) layer. Layer 2 RNs, which include the protocol stack up to the medium access control (MAC)/radio link control (RLC) layers, enable the possibility of doing decentralized radio resource management. Layer 3 or higher layer RNs could almost be considered as wireless base stations and support all the protocol layers of normal base stations.

One of the main driving forces behind the deployment of relays is the low infrastructure cost. RNs are normally connected using an in-band wireless link. E.g., RNs according to a discussed Long Term Evolution-Advanced (LTE-A) standard are normally connected using in-band wireless link based on the LTE advanced air interface.

Hereinafter, the deployment of relay nodes is described with emphasis on an LTE / LTE-Advanced network. However, the invention is not limited to any of these standards but may be applied to other wireless standards such as global system for communication (GSM), general packet radio service (GPRS), Universal Mobile Telecommunications System (UMTS), wireless local access network (WLAN), WiFi (trademark of WiFi alliance, USA), etc., too.

In order to make LTE-A economically viable, it is generally preferred to be as much backward compatible with Release 8 as possible, also with respect to relaying. This is especially desirable towards the user equipment side, as it will allow users to benefit from relaying with their Release 8 terminals. Based on previous 3GPP experiences it is preferred that full backward compatibility is given towards the user equipment side, i.e. Rel'8 and LTE-A terminals may work equally well in Rel'8 and LTE-A networks.

At the network side, software and even hardware updates between standard releases may be possible but preferably they should be as small as possible. Hence, from UE viewpoint the serving network node should preferably function in exactly the same way as Rel'8 eNodeB. Due to this preference the reduction of eNodeB functionalities when defining a relay node would not be appreciated and relay nodes may preferably need to support all main eNodeB functions. Due to this fact relay nodes according to certain embodiments of the present invention are preferably capable of flexible resource sharing with an eNodeB that controls them.

Therefore, for certain embodiments of the present invention, relaying is preferably performed on layer 3 or higher.

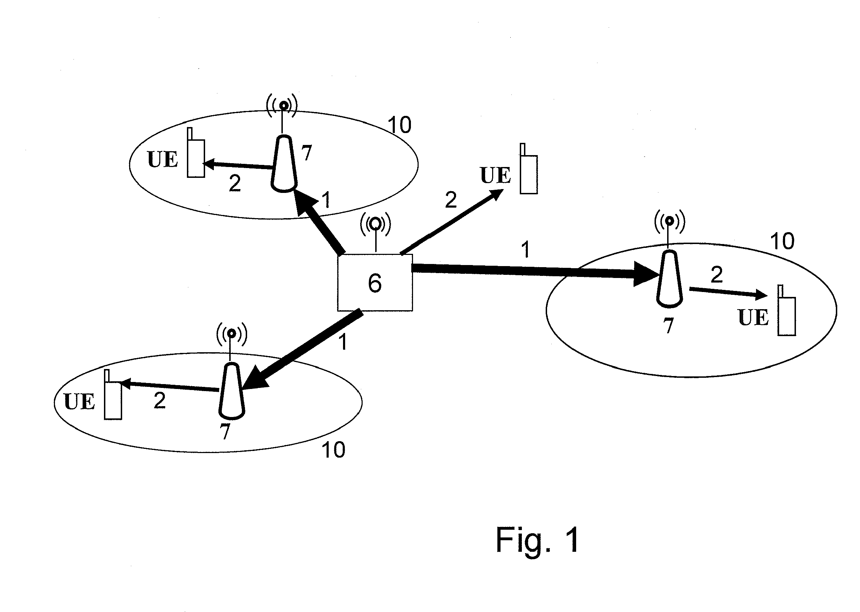

Fig. 1 illustrates a typical deployment scenario of LTE radio access network (RAN) with radio relayed extensions. In Fig. 1, a radio base station (eNodeB) is designated by 6, a relay node is designated by 7, and a user equipment by UE. 1 designates a relay link between the base station and a relay node, 2 designates an access link to a user equipment. 10 designates the coverage area of the corresponding relay node.

The base station 6 serves one or more user equipments UE via an access link 2. Furthermore, the base station is in communication with one or more relay nodes 7 via an access link 1. The access link uses an in-band wireless link based e.g. on an LTE advanced air interface standard. The relay node may be deployed e.g. to extend coverage, to increase throughput in hotspots, or to overcome excessive shadowing. E.g. the area 10 in Fig. 1 depicts a coverage area of the respective relay node.

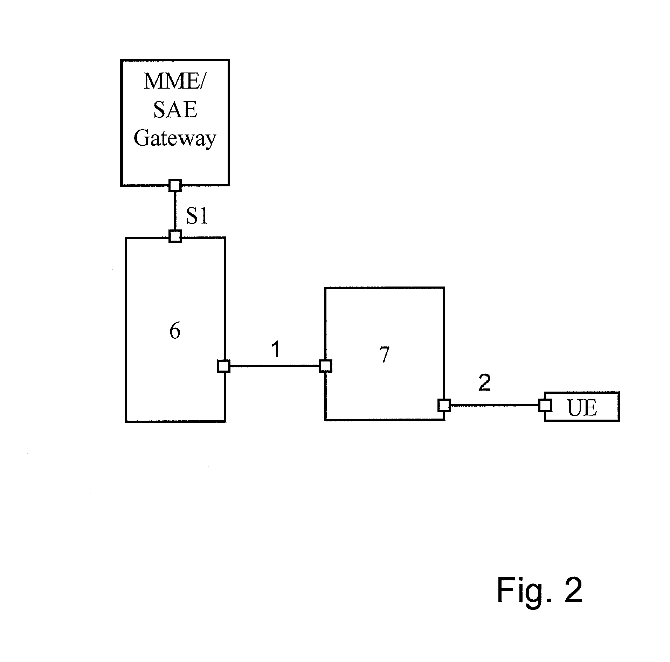

Fig. 2 shows some interfaces in a relay enhanced LTE network. As can be seen in the figure, the eNodeB 6 is connected to a core network element (e.g. Mobility Management Entity/System Architecture Evolution (MME/SAE) gateway) through the S1 interface. Furthermore, it is connected with the relay node 7 through a backhaul (relay) link 1 using the LTE-A air interface. The access link 2 between the relay node 7 and the user equipment UE is using LTE release 8 air interface for backward compatibility purposes.

The in-band wireless link consumes radio resources. Though a deployment scenario corresponding to Fig. 1 is a cheap and simple solution, there might be a need to support out-of-band wireless links (microwave, high speed packet access (HSPA), etc.) instead of the in-band wireless link. This is especially significant in scenarios/durations where the radio resources are limited and not enough resources can be reserved to the relay (backhaul) link without compromising the quality for users that are directly being served by the eNodeB (eNB). Thus, it can be beneficial to use multiple interfaces in the backhaul link. This may not only increase system performance but also add robustness to the system by switching between the interfaces, or even sharing the load between the multiple interfaces when the need arises.

The prevalence of overlay networks where base stations of multiple networks with different interfaces (e.g. GPRS, UMTS, HSPA, etc) are available at the site of the eNodeB facilitates the possibility to set up a secondary link between the eNodeB and a relay node on one or more of the other interfaces not compatible with the LTE-A air interface to use them for switching, load distribution or load-sharing.

According to certain embodiments of the present invention, multi-mode relay nodes and the procedures and mechanisms for enabling/disabling the different interfaces are proposed. E.g. such enabling/disabling may take place to optimize usage of radio system resources.

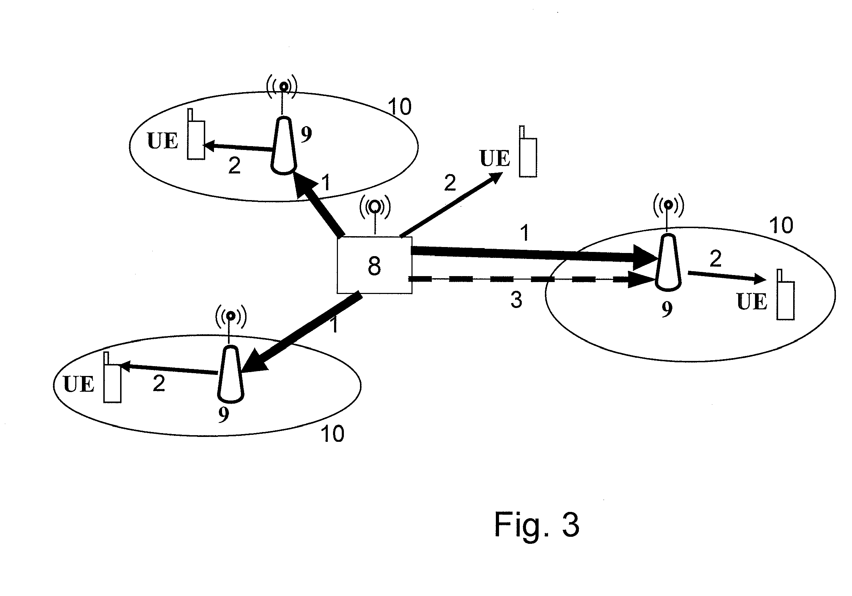

Fig. 3 illustrates a deployment scenario of LTE radio access network (RAN) with multi-mode relay nodes. In Fig. 3, a radio base station (eNodeB) is designated by reference numeral 8, a relay node is designated by reference numeral 9, and a user equipment by UE. Reference numeral 1 designates an in-band wireless relay link between the base station and a relay node, Reference numeral 2 designates an access link to a user equipment. Reference numeral 10 designates the coverage area of the corresponding relay node.

The base station 8 serves one or more user equipments UE via an access link 2. Furthermore, the base station is in communication with one or more relay nodes 9 via an access link 1. The access link 1 uses an in-band wireless link based e.g. on an LTE advanced air interface standard. The relay node 9 may be deployed e.g. to extend coverage, to increase throughput in hotspots, or to overcome excessive shadowing. E.g. the area 10 in Fig. 3 depicts a coverage area of the respective relay node.

In addition to the deployment scenario shown in Fig. 1, the deployment scenario according to Fig. 3 also comprises a secondary link (secondary relay link) 3 between the eNodeB 8 and one of the relay nodes 9. The secondary link 3 is based on a protocol not compatible with the protocol of the relay link 1, i.e. not compatible with LTE-A in the present embodiment. It may be a wireless link based e.g. on GSM, GPRS, HSPA, WLAN, WiFi, microwave, etc.

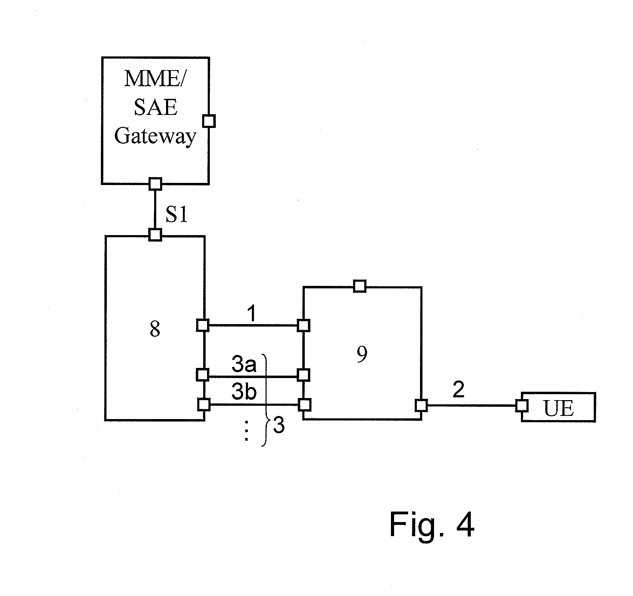

Fig. 4 shows the different interfaces in a relay enhanced LTE network with a multi-mode relay node. As can be seen in the figure, the eNodeB 8 is connected to a core network element (MME/SAE gateway) through the S1 interface. Furthermore, it is connected with the relay node 9 through a backhaul (relay) link 1 using the LTE-A air interface. The access link 2 between the relay node 7 and the user equipment UE is preferably using LTE release 8 air interface for backward compatibility purposes.

In addition to the links shown in Fig. 2, Fig. 4 shows a new system architecture comprising secondary links 3 between the eNodeB 8 and the relay node 9. In the Figure, two secondary links 3a, 3b are shown, but the number may be any positive number.

For an operation of this embodiment, the following procedures are proposed:
1. Identification of a supported secondary interface;
2. Activation of a secondary interface;
3. Deactivation of a secondary interface;
4. Selection of an interface to use;
5. Selection of multiple interfaces at once for load-balancing purposes.

In particular, the third to fifth procedures are not mandatory for the embodiment to work but are regarded as favorable for optimum performance of the system.

The following sections describe these different procedures in detail.

### (1) Identification of supported interfaces

When a RN is powered on, it has to be associated with an eNodeB (eNBr, also known as "mother eNB") before it can become fully operational. This is because it is not yet connected to the core network side and a relaying UE connection is feasible only through the mother eNB.

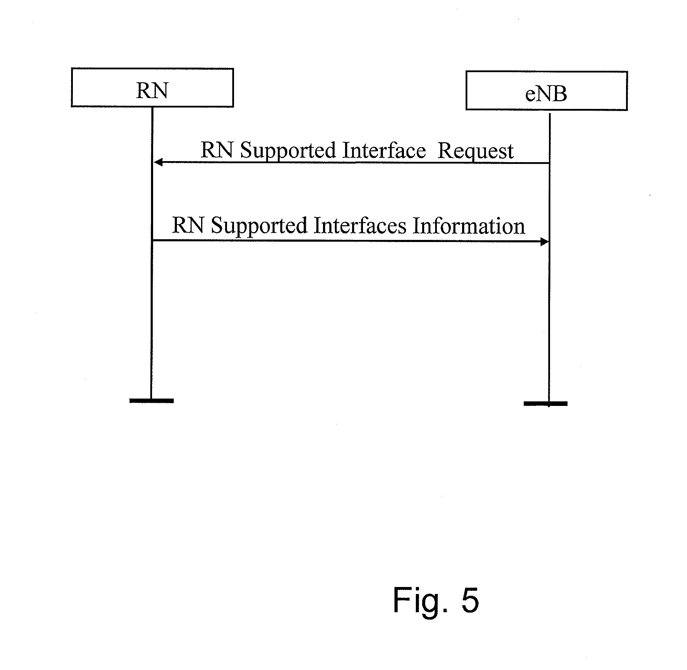

It is necessary for the eNodeBs to know the interfacing options available at a relay node RN. When the association with the mother eNB is complete, the mother eNB can start a new radio resource control (RRC) procedure, as shown in Figure 5. The mother eNB sends a "Supported Interfaces request" message to the RN, and the RN responds with a "Supported Interfaces Information" message, which contains detailed information about the RN's supported interfaces.

Note that this RRC procedure has to be conducted via the LTE-A air interface as that is the original interface used when the RN is associated with a mother eNB.

If the relay node is a single-mode relay node, i.e. a relay node without a secondary interface for the relay link, the "Supported interfaces request" will be ignored by the single mode RNs, as it may be not aware of this procedure. Thus, if the mother eNB receives no response after a certain timeout period, it will assume the RN being a single mode RN. Thus, a multi-mode RN may coexist with a single (LTE-A) mode RN at the same mother eNB.

Another possibility is to make the exchange of supported interface information part of the mother eNB-RN association procedure. That is, multi-mode RNs can include the information regarding their supported interfaces in the "association confirm/complete" message they send to the mother eNB.

Still another option would be directly inputting the information about the supported interfaces at the mother eNB when installing the relay node. E.g., a network planning tool or a human operator can input the information into the database or another storage of the mother eNB.

It is favorable that the mother eNB is aware of all supported secondary interfaces. However, it is also possible that the mother eNB knows only about a subset of the supported secondary interfaces.

### (2) Activation of a secondary interface

Once a secondary interface is known to the mother eNB, it may be activated if the mother eNB supports the protocol of the secondary interface.

Several criteria can be used for a decision to activate a secondary interface:
- Select the interface that belongs to the network with the lowest load;
- Select the interface that belongs to the network that can provide the highest capacity for the relay link;
- Select the interface that is the cheapest, from the operators OPEX point of view; for example, whether using microwave or not can depend on this criterion;
- Selection of the network which optimizes certain resources like energy.

Also, load balancing information from neighboring cells may be taken into account. A combination of several of the criteria mentioned above could also be used in the decision process.

The relay node may support the decision process by providing some load data to the mother eNB, preferably via the LTE-A interface.

Alternatively, a secondary interface may be always activated when it is known to the mother eNB.

The decision to activate a secondary interface is communicated to the RN via the in-band (LTE-A) air interface. Then, the RN activates his corresponding secondary interface and the secondary link is established.

In some embodiments, more than one secondary link may be activated.

Reactivation of a link is done in the same way as activation of a link.

### (3) Deactivation of secondary interfaces

For optimum system performance, there may be a need to deactivate the currently active secondary interface and also to activate or reactivate another secondary interface. If after a de-activation no secondary interface is still activated, any subsequent communication is performed via the in-band link, i.e. the LTE-A link, that is always active.

The decision to deactivate an interface (and maybe to activate another secondary interface) is done in a similar fashion as in the case of the interface activation procedure described in section (2), i.e. based on e.g. load, throughput, cost factors or other reasons.

This decision is communicated to the RN via the LTE-A air interface and the RN deactivates the current interface. In addition, depending on the decision, the RN and the eNB may activate or reactivate a new secondary interface and establish a new secondary link.

Several conditions should be fulfilled when a secondary interface is deactivated in order to make sure that no user data is lost and no active bearer that belongs to a UE connected to the relay node is disconnected:
(a) Adequate resources have to be allocated in the new network that is going to be accessed via the new secondary interface before the interface modification could be made to ensure that the Quality of Service (QoS) of active bearers will still be satisfied;
(b) The relayed UEs should not get aware of the interface changes;
(c) Any outstanding data in the old secondary interface should be forwarded to the new interface, both in the mother eNB and RN, before the old secondary interface is deactivated.

If the conditions (a) to (c) are not fulfilled, the activation/deactivation of the secondary interface may still be performed. However, in this case the communication of the user equipment may be spoiled by this procedure. E.g. some data or a call may be lost.

### (4) Selection of secondary interface

As mentioned above, the LTE-A air interface is the default interface to be used between the mother eNB and the RN. However, once at least one secondary link is activated, the interface to be used can be selected for a communication between mother eNB and RN except for control of the multi-mode operation of the RN, i.e. the activation/deactivation of a secondary link.

The LTE-A air interface must always be active even when the selected interface is another one, as it is needed for signaling to control the multi-mode operation of the RN.

The decision to use a specific relay interface is done in a similar fashion as in the case of the interface activation procedure described in section (2), i.e. based on e.g. load, throughput, cost factors or other reasons. The interface selection is controlled by the mother eNB. This selection may be communicated to the RN via the LTE-A air interface.

The usage of a secondary interface may also be predefined for a case when the secondary interface is activated.

Then, the mother eNB and the RN use the defined secondary interface for the communication.

The selection may be valid for all communication except the multi-mode control operation, or only for certain communications, e.g. depending on the amount or type of data to be transmitted, a user, a user equipment etc.

### (5) Selection of multiple secondary interfaces

The interface selection feature described in section (4) above may be extended to support load balancing, i.e. the old interface will not be deactivated and will still be selected for some of the UEs or bearers. The load balancing procedure is important in cases where the available resources in one network are not enough for the backhaul link and some of the connections have to be transferred to another network.

Two main reasons for selecting multiple interfaces are:
- A new bearer is to be established by a relayed UE and there are not enough resources for the backhaul link for this connection; or
- A new bearer is to be established by a UE connected directly with the mother eNodeB, but there are not enough radio resources, unless some resource being used for the backhaul link is freed.

In the first case, the new bearer may be associated with the newly selected secondary interface and the rest of the bearers may be not affected.

In the second case, the mother eNB may select a bearer or even bearers being used for the relayed link which may be transferred to a secondary interface, so that the bearer can be admitted additionally to the cell.

Measures may be taken on the data of the selected bearers in order to avoid user data loss and dropped bearers.

Thus, the backhaul relaying interface between a multi-mode RN and a corresponding eNB may be provided simultaneously by more than one radio link, regardless of the radio access technologies used to implement each radio link; and the setup and utilization of at least one activated radio link for relaying may be for the aforementioned load balancing purposes, controlled and coordinated by the eNB.

The deployment of multi-mode RNs will not only make the system more flexible by creating alternatives for load sharing and load switching, it also make the system more robust to failures. That is, when the radio resources in one of the networks supported by the backhaul link are exhausted, there is still a way to transfer the load to the other networks, without dropping already ongoing bearers.

The deployment of multi-mode RNs according to some embodiments may be completely transparent to the UEs, and as such release 8 UEs will benefit from it. However changes are required in the RN and the eNBs. The most significant change is the switching on and off of the interfaces and handling the data that belong to already ongoing bearers. However, as mentioned above, such compatibility towards the UEs is not mandatory for certain embodiments of the invention.

According to the present embodiment there is a maximum of two hops in the system (eNB-UE or eNB-RN-UE). Furthermore, there are no connections between relay nodes, i.e. the relay node network has tree topology.

These two restrictions are used to simplify the embodiment but it is emphasized that embodiments with more than two hops and/or other network topologies are also within the scope of the invention.

The LTE-A air interface according to some embodiments according to the invention may be a logical interface. For example, if relaying is based on layer 3 or above, the information to be transmitted via the LTE-A air interface may be physically transmitted using a secondary interface.

The deployment of an apparatus, system, method and computer program product, respectively, according to any of these embodiments of the invention will not only make a relayed system more flexible by creating alternatives for load sharing and load switching, it also makes the system more robust to failures. That is, when the radio resources in one of the networks supported by the secondary link (backhaul link) are exhausted, there is still a way to transfer the load to the other networks, or even to an internet connection of the core network.

According to certain embodiments of the present invention as described above, there is provided an apparatus, a system, a method, and a computer program product for multi-mode relaying. Specifically, a radio base station and a relay node connectable with each other by a secondary out-of-band wireless link in addition to an in-band link are described. The in-band link is used to control the activation/deactivation of the secondary link.

The blocks, apparatuses, systems, techniques or methods described herein may be implemented in, as non-limiting examples, hardware, software, firmware, special purpose circuits or logic, general purpose hardware or controller or other computing devices, or some combination thereof.

That is, it is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus (8), comprising
base station means configured to provide a radio base station functionality comprising the ability to communicate wirelessly using a protocol compatible with a first interface protocol;
first interface means configured to be wirelessly operably connected with a second apparatus (9) using the first interface protocol;
secondary interface means configured to be operably connected with the second apparatus (9) using a secondary interface protocol not compatible with the first interface protocol;
decision means configured to meet, based on a criteria information, a decision whether to operably connect the secondary interface with the second apparatus and to cause transmitting of a corresponding control information to the second apparatus, wherein the decision to operably connect the secondary interface is met only if a type information corresponds to the secondary interface means;
activating means configured to cause the secondary interface means to be operably connected with the second apparatus depending on the decision;
wherein the control information is transmitted using the first interface means independent from the decision and from the presence of an operable connection of the secondary interface means with the second apparatus.

2. The apparatus according to claim 1, wherein
the first interface means is additionally configured to receive an identification of an interface protocol, and wherein the apparatus further comprises
type setting means configured to set the type information corresponding to the secondary interface means when the identification is an identification of the secondary interface protocol.

3. The apparatus according to any of claim 1 and 2, further comprising
setting means configured to set the criteria information based on at least one of a predefined information, a load related to the first interface protocol, a load related to the secondary interface protocol, a load balancing information from neighboring cells, a load information received from the second apparatus, a capacity of the connection of the first interface means, a capacity of the connection of the secondary interface means, an earlier decision of the decision means, an information related to costs of the connection of the first interface means and the secondary interface means, an information related to the energy consumption of the connection of the first interface means and the secondary interface means.

4. The apparatus according to any of claims 1 to 3, further comprising
load multiplex means configured
to multiplex, when the secondary interface means is operably connected with the second apparatus, a load to be communicated with the second apparatus between the first interface means and the secondary interface means based on at least one of a predefined information, a load related to the first interface protocol, a load related to the secondary interface protocol, a load balancing information from neighboring cells, a load information received from the second apparatus, a capacity of the connection of the first interface means, a capacity of the connection of the secondary interface means, an information related to costs related to the load on the connection of the first interface means and the secondary interface means, an information related to the energy consumption related to the load on the connection of the first interface means and the secondary interface means;
to cause at least one of the first interface means and the secondary interface means to transmit a multiplex information corresponding to the load distribution; and
to demultiplex a load received by the first interface means and the secondary interface means.

5. The apparatus according to any of claims 1 to 4 comprising more than one secondary interface means.

6. The apparatus according to any of claims 1 to 5, wherein the radio base station functionality is a NodeB functionality of a long term evolution system.

7. The apparatus according to any of claims 1 to 6, wherein the secondary interface protocol is based on one of a wireless interface protocol including a general packet radio service, a universal mobile telecommunications system, a high speed packet access, and a microwave based protocol.

8. Apparatus (9), comprising
relay node means configured to provide a relay node functionality comprising the ability to communicate wirelessly using a protocol compatible with a first interface protocol;
first interface means configured to be wirelessly operably connected with a second apparatus (8) using the first interface protocol including to receive a control information;
secondary interface means configured to be operably connected with the second apparatus (8) using a secondary interface protocol not compatible with the first interface protocol; and
activating means configured to cause the secondary interface means to be operably connected with the second apparatus depending on the decision information;
wherein the control information is received by the first interface means independent from a content of the control information and from the presence of an operable connection of the secondary interface means with the second apparatus.

9. The apparatus according to claim 8, wherein
the first interface means is additionally configured to send an identification of the secondary interface protocol.

10. The apparatus according to any of claims 8 and 9,
wherein at least one of the first interface means and the secondary interface means is further configured to transmit to the second apparatus at least one of a load measured related to the first interface protocol and a load measured related to the secondary interface protocol.

11. The apparatus according to any of claims 8 to 10,
wherein at least one of the first interface means and the secondary interface means is further configured to receive a multiplex information; the apparatus further comprising
load multiplex means configured to
de-multiplex a load received by the first interface means and the secondary interface means based on the multiplex information; and to
multiplex a load to be communicated with the second apparatus between the first interface means and the secondary interface means based on the multiplex information.

12. The apparatus according to any of claims 8 to 11, comprising more than one secondary interface means.

13. The apparatus according to any of claims 8 to 12,
wherein the relay node functionality is a relay node functionality of a long term evolution system.

14. The apparatus according to any of claims 8 to 13,
wherein the secondary interface protocol is based on one of a wireless interface protocol including a general packet radio service, a universal mobile telecommunications system, a high speed packet access, and a microwave based protocol.

15. A system, comprising
a first apparatus (8) according to any of claims 1to 7; and
a second apparatus (9) according to any of claims 8to 14;
wherein the first interface means of the first apparatus and the first interface means of the second apparatus are configured to be operably connected with each other;
wherein the secondary interface means of the first apparatus and the secondary interface means of the second apparatus are configured to be operably connected with each other; and
wherein the control information received by the first interface means of the second apparatus corresponds to the control information sent by the first interface means of the first apparatus.

16. A method, comprising
wirelessly operably connecting a first apparatus (8) with a second apparatus (9) using a first interface protocol, wherein the first apparatus is configured to provide a radio base station functionality comprising the ability to communicate wirelessly using a protocol compatible with the first interface protocol;
meeting a decision by the first apparatus based on a criteria information, whether the first apparatus is operably connected with the second apparatus using a secondary interface protocol not compatible with the first interface protocol, wherein the decision to operably connect using the secondary interface protocol is met only if a type information corresponds to the secondary interface protocol;
depending on the decision, operably connecting the first apparatus with the second apparatus using the secondary interface protocol; and
transmitting a control information corresponding to the decision using the first interface protocol independent from the decision and from the presence of an operable connection using the secondary interface protocol.

17. The method according to claim 16, further comprising
receiving an identification of an interface protocol; and
setting the type information corresponding to the secondary interface protocol when the identification is an identification of the secondary interface protocol.

18. The method according to any of claims 16 and 17,
wherein the criteria information is set based on at least one of a predefined information, a load measured related to the first interface protocol, a load measured related to the secondary interface protocol, a load balancing information from neighboring cells, a load information received from the second apparatus, a capacity of the connection of the first interface protocol, a capacity of the connection of the secondary interface protocol, an earlier decision, an information related to costs of the connection of the first interface protocol and the secondary interface protocol, an information related to the energy consumption of the connection of the first interface protocol and the secondary interface protocol.

19. The method according to any of claims 16 to 18, further comprising
multiplexing, when the secondary interface means is operably connected with the second apparatus, a load to be communicated with the second apparatus between the first interface protocol and the secondary interface protocol based on at least one of a predefined information, a load measured related to the first interface protocol, a load measured related to the secondary interface protocol, a load balancing information from neighboring cells, a load information received from the second apparatus, a capacity of the connection of the first interface protocol, a capacity of the connection of the secondary interface protocol, an information related to costs related to the load on the connection of the first interface protocol and the secondary interface protocol, an information related to the energy consumption related to the load on the connection of the first interface protocol and the secondary interface protocol;
transmitting a multiplex information corresponding to the load distribution using at least one of the first interface protocol and the secondary interface protocol; and
demultiplexing a load received using the first interface protocol and the secondary interface protocol.

20. A method comprising
operably connecting a first apparatus (9) with a second apparatus (8) using a first interface protocol, wherein the first apparatus is configured to provide a relay node functionality comprising the ability to communicate wirelessly using a protocol compatible with the first interface protocol;
receiving by the first apparatus from the second apparatus a control information using the first interface protocol;
depending on the control information, operably connecting the first apparatus with the second apparatus using a secondary interface protocol not compatible with the first interface protocol;
wherein the control information is received using the first interface protocol independent from a content of the control information and from the presence of an operable connection with the second apparatus using the secondary interface protocol.

21. The method according to claim 20, further comprising
sending an identification of the secondary interface protocol.

22. The method according to any of claims 20 and 21, further comprising
transmitting to the second apparatus at least one of a load measured related to the first interface protocol and a load measured related to the secondary interface protocol.

23. The method according to any of claims 20 to 22, further comprising
receiving a multiplex information;
de-multiplexing a load received using the first interface protocol and the second interface protocol based on the first multiplex information; and
multiplexing a load to be communicated with the second apparatus between usage of the first interface protocol and usage of the secondary interface protocol based on the multiplex information.

24. A computer program product embodied on a computer-readable medium, comprising program code means which perform, when run on a computer, the method according to any of claims 16 to 23.
